# EUROPÄISCHE PATENTSCHRIFT

(11) **EP 2 648 951 B1**
(45) Veröffentlichungstag und Bekanntmachung des Hinweises auf die Patenterteilung: **13.08.2014**
(21) Anmeldenummer: 11771121.8
(22) Anmeldetag: 17.10.2011
(51) Int. Cl.: B60T 8/1764, B60T 8/40, B60T 8/50, B60T 13/66

(54) **BREMSSYSTEM UND VERFAHREN ZUM BREMSEN EINES FAHRZEUGES BEI SPRUNGHAFTEN VERÄNDERUNGEN DES REIBUNGSKOEFFIZIENTEN**
BRAKING SYSTEM AND METHOD FOR BRAKING A VEHICLE IN THE EVENT OF ABRUPT CHANGES OF THE FRICTION COEFFICIENT
SYSTÈME DE FREINAGE ET PROCÉDÉ DE FREINAGE D'UN VÉHICULE EN CAS DE VARIATIONS BRUSQUES DES COEFFICIENTS D'ADHÉRENCE

(30) Priorität: 10.12.2010 DE 102010062816
(43) Veröffentlichungstag der Anmeldung: 16.10.2013
(73) Patentinhaber: Robert Bosch GmbH, 70442 Stuttgart (DE)
(72) Erfinder: BRUEGGEMANN, Rainer, 71634 Ludwigsburg (DE); REIZE, Andreas, 74740 Adelsheim (DE); FRUEH, Philipp, Clayton 3169 (AU)
(86) Internationale Anmeldenummer: PCT/EP2011/068069
(87) Internationale Veröffentlichungsnummer: WO 2012/076224

(56) Entgegenhaltungen:
- DE-A1- 19 610 863
- US-A1- 2003 028 308
- US-A1- 2009 015 059

## Beschreibung

### Stand der Technik

Die Erfindung betrifft ein Bremssystem für Fahrzeuge mit verbesserten Bremseigenschaften in Fahrsituationen, in denen das Fahrzeug auf einer Fahrbahn mit einem negativen Reibwertsprung bremst, sowie ein Verfahren zum Bremsen eines Fahrzeuges in einer entsprechenden Fahrsituation.

Aus dem Stand der Technik sind verschiedene Bremsregelsysteme, wie z. B. ABS, ASR oder ESP, bekannt, mit denen das Blockieren der Räder beim Bremsen verhindert werden kann. Diese Systeme überwachen in der Regel den Radschlupf mittels Rad-Drehzahlsensoren. Erkennt das Bremsregelsystem an einem Rad einen zu hohen Radschlupf, wird der Bremsdruck in der zugehörigen Radbremse vorrübergehend abgebaut. Hierzu wird üblicherweise ein Auslassventil geöffnet. Die in der Radbremse befindliche Bremsflüssigkeit strömt dann durch das Auslassventil in eine Speicherkammer und wird von dort mittels einer Rückförderpumpe in Richtung des Hauptbremszylinders zurück gefördert.

In bestimmten Bremssituationen, wie z. B. Notbremsungen, in denen ein relativ hoher Bremsdruck an den Radbremsen anliegt, kann es vorkommen, dass die Rückförderpumpe nicht in der Lage ist, die Bremsflüssigkeit ausreichend schnell zurück zu fördern, mit der Folge, dass die Speicherkammer voll läuft. In diesem Fall baut sich der an der Radbremse wirkende Bremsdruck langsamer ab als gewünscht, so dass das zugehörige Rad länger als notwendig blockiert bleibt. In diesem Zustand ist das Fahrzeug bekanntlich nicht lenkbar bzw. wird instabil. Eine Vergrößerung der Speicherkammer oder der Rückförderpumpe wäre prinzipiell möglich, ist aber aus Kostengründen unwirtschaftlich und daher unerwünscht.

Die Offenlegungsschrift DE 196 10 863 A1 offenbart ein Verfahren zur Ermittlung eines den Reibwert der Fahrbahn repräsentierenden Signals bei einer Bremsanlage, bei der zum Abbau des Bremsdrucks in einer Radbremseinheit eine durch ein Ansteuersignal gesteuerte Förderpumpe vorgesehen ist. Das den Reibwert der Fahrbahn repräsentierende Signal wird abhängig von dem erfassten, in Reaktion auf einen Druckabbau auftretende Fördervolumen der Förderpumpe ermittelt. Das Volumen, das zur Blockierverhinderung aus einer Radbremseinheit entfernt werden muss, stellt ein gutes Maß für den Reibwert der Fahrbahn dar, auf dem sich das jeweilige Rad bewegt. Die Ansteuerung der Förderpumpe geschieht dabei getaktet, im allgemeinen pulsweitenmoduliert.

### Offenbarung der Erfindung

Es ist daher die Aufgabe der vorherigen Erfindung, eine Bremsvorrichtung zum Bremsen von Fahrzeugen beziehungsweise ein entsprechendes Verfahren zu schaffen, mit dem die Stillstandszeiten der Räder bei einer ABS-Bremsung verringert werden können, ohne die Speicherkammer oder die Rückförderpumpe größer dimensionieren zu müssen.

Gelöst wird diese Aufgabe gemäß der Erfindung durch die im Patentanspruch 1 sowie im Patentanspruch 4 angegebenen Merkmale. Weitere Ausgestaltungen der Erfindung sind Gegenstand von Unteransprüchen.

Gemäß der Erfindung wird vorgeschlagen, in Fahrsituationen, in denen das Fahrzeug ein Bremsmanöver mit ABS-Regelung auf einer Fahrbahn mit einem negativen Reibwertsprung durchführt, die Verstärkung des Bremskraftverstärkers zu reduzieren. Da die Rückförderpumpe bei einer ABS-Regelung gegen den am Hauptbremszylinder erzeugten Bremsdruck arbeitet, führt eine Verringerung der Bremskraftverstärkung zu einem geringeren Hauptbremszylinderdruck und somit zu einer geringeren Belastung für die Rückförderpumpe. Die Rückförderpumpe hat somit eine vergleichsweise höhere Förderleistung und kann entsprechend mehr Hydraulikfluid aus den Radbremsen zurück in Richtung des Hauptbremszylinders fördern. Dadurch können wiederum die Radstillstandszeiten bei einer ABS-Regelung verkürzt werden.

Eine erfindungsgemäße Bremsvorrichtung umfasst entsprechend Mittel zum automatischen Einstellen einer geringeren Verstärkung des Bremskraftverstärkers, wenn das Fahrzeug ein Bremsmanöver mit ABS-Regelung auf einer Fahrbahn mit negativem Reibwertsprung durchführt.

Die Verstärkung des Bremskraftverstärkers kann im Falle eines Unterdruck-Bremskraftverstärkers beispielsweise mit Hilfe der Vakuumpumpe beeinflusst werden. Die vorstehend genannten Mittel zum Einstellen der Verstärkung des Bremskraftverstärkers können somit zum Beispiel eine Vakuumpumpe und eine Steuereinheit umfassen, mittels derer die Vakuumpumpe in der gewünschten Weise angesteuert wird.

Bei einem Bremsmanöver auf hohem Reibwert machen der Hauptbremszylinder und somit auch der Bremskraftverstärker einen relativ großen Hub. Dadurch wird das Unterdruckniveau in der Vakuumkammer des Bremskraftverstärkers abgesenkt und der Absolutdruck erhöht sich, wodurch sich wiederum die Verstärkung des Bremskraftverstärkers verringert. Bei herkömmlichen Bremsanlagen würde in diesem Fall die Vakuumpumpe anlaufen, um diesen Effekt auszugleichen. Gemäß der Erfindung wird nun vorgeschlagen, die Leistung der Vakuumpumpe vergleichsweise zu reduzieren. Zu diesem Zweck kann z. B. das Anlaufen der Vakuumpumpe unterdrückt werden, oder die Vakuumpumpe kann mit zeitlicher Verzögerung anlaufen. Dadurch ist die Verstärkung des Bremskraftverstärkers im Vergleich zu einem Bremsmanöver auf einer Fahrbahn mit etwa gleichbleibendem Reibwert geringer. In Bremssituationen auf einer Fahrbahn mit einem negativen Reibwertsprung ist der vom Hauptbremszylinder erzeugte Bremsdruck somit vergleichsweise geringer als in Bremssituationen auf einer Fahrbahn ohne negativen Reibwertsprung.

Zur Erkennung eines negativen Reibwertsprungs, d.h. eines Übergangs von einem Fahrbahnbereich mit höherem Reibwert (z. B. Asphalt) auf einen Fahrbahnbereich mit geringerem Reibwert (z. B. Eis), ist vorzugsweise eine geeignete Sensorik vorgesehen. Die Sensorik umfasst vorzugweise wenigstens einen Rad-Drehzahlsensor. Eine andere, wie z. B. eine optische Sensorik, ist gleichermaßen einsetzbar.

Ein negativer Reibwertsprung der Fahrbahn kann beispielsweise durch eine Überwachung der Rad-Drehzahlen erkannt werden. Sobald das Fahrzeug von einem Fahrbahnabschnitt mit hohem Reibwert auf einen Fahrbahnabschnitt mit deutlich geringerem Reibwert kommt und dabei bremst, geraten die Vorderräder in Schlupft, während die Hinterräder deutlich weniger Schlupf aufweisen. Ein negativer Reibwertsprung kann somit beispielsweise erkannt werden, wenn der Radschlupf der Vorderräder einen vorgegeben ersten Schwellenwert übersteigt und der Radschlupf der Hinterräder kleiner ist als ein vorgegebener zweiter Schwellenwert.

Gemäß einer speziellen Ausführungsform der Erfindung wird das Unterdruckniveau in der Vakuumkammer des Bremskraftverstärkers sensorisch überwacht und die Vakuumpumpe abhängig vom Unterdruckniveau betrieben. Bei einem sehr niedrigen Absolutdruck kann die Vakuumpumpe während einer ABS-Regelung, wie vorstehend erwähnt, beispielsweise nicht oder verzögert anlaufen. Bei einem etwas höheren Absolutdruck kann die Vakuumpumpe beispielsweise mit einer etwas geringeren Leistung betrieben werden als bei einer ABS-Bremsung auf einer Fahrbahn mit etwa gleich bleibendem Reibwert.

Die Erfindung wird nachstehend anhand der beigefügten Zeichnungen beispielhaft näher erläutert. Es zeigen:
Figur 1 eine schematische Darstellung eines Bremskreislaufs eines hydraulischen Bremssystems;
Figur 2 eine schematische Darstellung eines Fahrzeuges auf einer Fahrbahn mit einem negativen Reibwertsprung;
Figur 3 ein Ablaufdiagramm einer möglichen Ausführungsform eines erfindungsgemäßen Verfahrens.

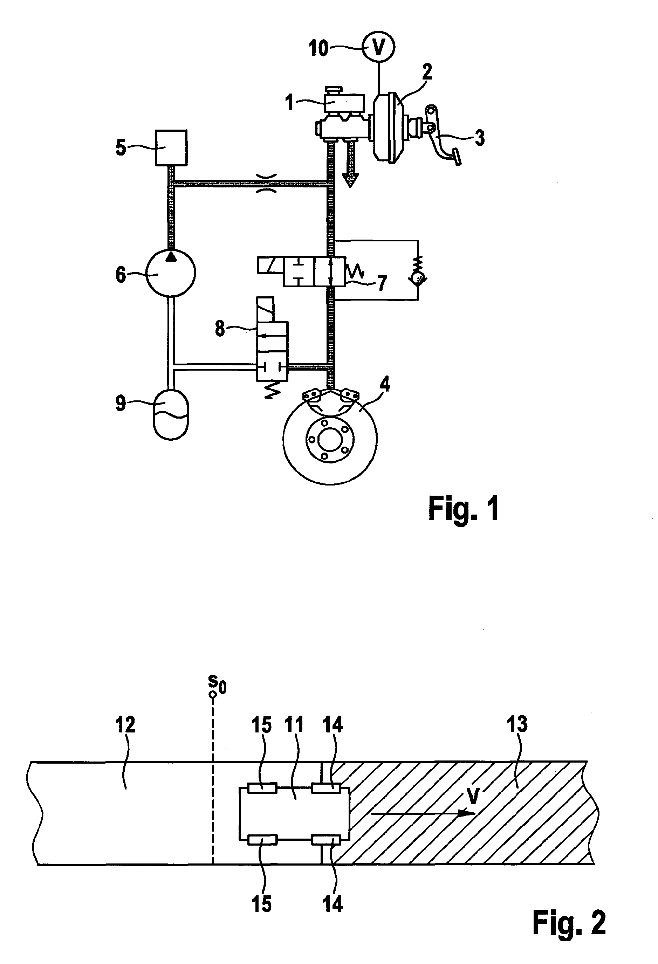

Figur 1 zeigt einen typischen Bremskreislauf eines hydraulischen Bremssystems mit ABS-Funktion. Dieser enthält ein Hauptbremszylinder 1 mit einem darauf angeordneten Behälter für das Hydraulikfluid. Ein Bremskraftverstärker 2 ist mit einem Bremspedal 3 gekoppelt und verstärkt die vom Fahrer aufgebrachte Bremskraft.

Der am Hauptbremszylinder 1 erzeugte Bremsdruck wird über ein Einlassventil 7 zu einer Radbremse 4 geleitet. Ein am Ausgang der Radbremse 4 angeordnetes Auslassventil 8 ist in diesem Zustand geschlossen.

Figur 2 zeigt ein Fahrzeug 11, das mit einer Geschwindigkeit v auf einer Fahrbahn mit unterschiedlichen Reibwerten fährt. Die Fahrbahn weist einen Bereich 12 mit einem relativ hohen Reibwert µ, wie z. B, Asphalt, und einen Bereich 13 mit einem relativ niedrigen Reibwert µ, wie zum Beispiel Schnee oder Eis, auf. Das Fahrzeug 11 befindet sich in einem Bremsvorgang, der am Ort s₀ begonnen hat.

In der dargestellten Position befindet sich das Fahrzeug 11 mit den Vorderrädern 14 direkt am Übergang zwischen dem Bereich 12 mit dem hohen Reibwert und dem Bereich 13 mit dem niedrigen Reibwert. Der Übergang zwischen den beiden Bereichen 12, 13 wird auch als negativer Reibwertsprung bezeichnet.

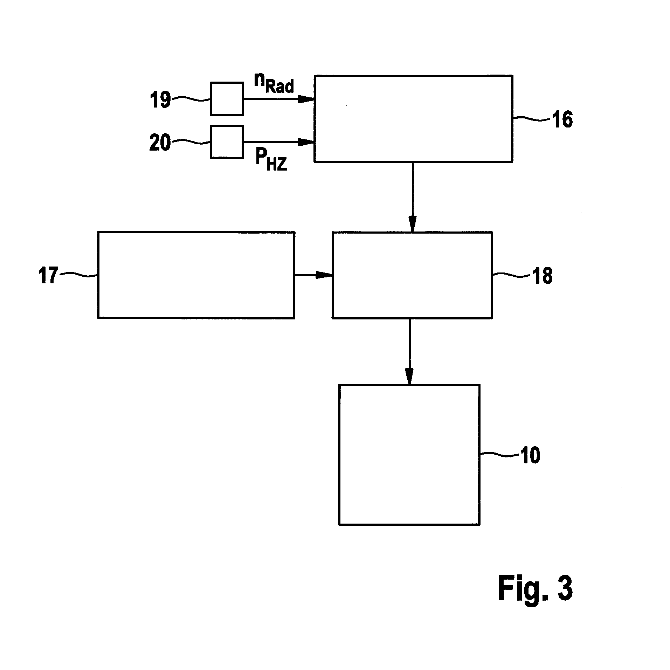

Sobald die Vorderräder 14 des Fahrzeugs 11 auf den Bereich 13 mit geringem Reibwert gelangen, blockieren sie und zeigen einen entsprechend hohen Radschlupf. Der Radschlupf wird während der Fahrt mittels Rad-Drehzahlsensoren 19 (siehe Figur 3) überwacht. Die Hinterräder 15 befinden sich in der dargestellten Situation noch auf dem Bereich 12 mit höherem Reibwert und zeigen somit einen deutlich geringeren Radschlupf.

Sobald an den Vorderrädern 14 ein erhöhter Radschlupf festgestellt wurde, wird der ABS-Regler aktiv. Dadurch wird das Einlassventil 7 geschlossen und das Auslassventil 8 geöffnet. Das in der Radbremse 4 befindliche Hydraulikfluid fließt somit aus der Radbremse 4 in eine Speicherkammer 9 (siehe Fig. 1) und wird von dort mittels einer sogenannten Rückförderpumpe 6 in Richtung des Hauptbremszylinders 1 zurück gefördert. Zur Dämpfung des Systems ist am Ausgang der Rückförderpumpe 6 ein Pufferspeicher 5 vorgesehen.

In der Anfangsphase des Bremsvorgangs, wenn sich das Fahrzeug 11 noch auf dem Fahrbahnbereich 12 befindet, wird relativ viel Bremsfluid vom Hauptbremszylinder 1 in die Radbremse 4 verschoben, wobei der Bremskraftverstärker 2 einen entsprechend großen Hub ausführt. Dadurch erhöht sich der Druck in der Vakuumkammer des Bremskraftverstärkers 2. Bei einem Bremsmanöver auf einer Fahrbahn mit gleichmäßigem Reibwert würde in diesem Fall eine Vakuumpumpe 10 anlaufen, um diesen Effekt auszugleichen. Gemäß der Erfindung ist nun für den dargestellten Spezialfall einer Bremsung auf einer Fahrbahn mit negativem Reibwertsprung vorgesehen, die Verstärkung des Bremskraftverstärkers 2 im Vergleich zu einem Bremsmanöver auf gleich bleibendem Reibwert zu reduzieren, beziehungsweise die abnehmende Verstärkung des Bremskraftverstärkers nicht auszugleichen.

Gemäß einer bevorzugten Ausführungsform der Erfindung wird daher die Vakuumpumpe 10 bei Bremsmanövern auf einer Fahrbahn mit negativem Reibwertsprung nicht oder erst mit zeitlicher Verzögerung aktiviert. Wahlweise könnte sie auch mit einer vergleichsweise geringeren Leistung betrieben werden. Dadurch sinkt der am Hauptbremszylinder 1 erzeugte hydraulische Bremsdruck. Dies hat zur Folge, dass die Rückförderpumpe 6, die gegen den Hauptbremszylinderdruck arbeiten muss, weniger stark belastet ist und somit schneller läuft. Dadurch kann der Bremsdruck an der Radbremse 4 schneller abgebaut werden, so dass das Rad schneller wieder anläuft. Das Fahrzeug wird somit schneller wieder lenkbar.

Figur 3 zeigt nochmals die einzelnen Verfahrensschritte eines Verfahrens zum Betreiben einer Fahrzeug-Bremsanlage bei einem Bremsmanöver auf einer Fahrbahn mit negativem Reibwertsprung. Eine solche Fahrsituation wird von einem Algorithmus 16 erkannt, der die Rad-Drehzahlen n_{Rad} der einzelnen Räder 14, 15 und den Bremsdruck p_{HZ} auswertet. Die genannten Größen n_{Rad} und p_{Hz} werden mittels entsprechender Sensoren 19 und 20 gemessen. Wenn der am Hauptbremszylinder 1 anliegende Bremsdruck p_{HZ} größer ist als ein vorgegebener Schwellenwert, zum Beispiel 100 bar, sowie der Radschlupf an den Rädern 14 der Vorderachse größer ist als ein erster Schwellenwert, zum Beispiel 20 %, und der Radschlupf an den Rädern 15 der Hinterachse kleiner ist als ein zweiter Schwellenwert, zum Beispiel 5 %, wird ein Bremsmanöver auf einer Fahrbahn mit negativem Reibwertsprung erkannt. In diesem Fall erfolgt ein Signal an eine Steuereinheit 18 der Vakuumpumpe 10. Die Steuereinheit 18 steuert die Vakuumpumpe 10 dann in Abhängigkeit vom Unterdruckniveau im Bremskraftverstärker 2, der von einem zugehörigen Vakuumsensor 17 gemessen wird, an. Wenn der Druck in der Vakuumkammer des Bremskraftverstärkers relativ gering ist- die Verstärkung des Bremskraftverstärkers ist in diesem Fall relativ hoch - wird das Anlaufen der Vakuumpumpe 19 beispielweise unterdrückt und die Vakuumpumpe 10 nicht aktiviert. Ist der Druck dagegen höher - die Verstärkung des Bremskraftverstärkers ist eher gering - kann die Vakuumpumpe z. B. auch mit geringer Leistung betrieben werden.

## Patentansprüche

1. Bremsvorrichtung zum Bremsen der Räder eines Fahrzeugs (11), umfassend wenigstens einen Hauptbremszylinder (1), einen Bremskraftverstärker (2), eine Radbremse (4), eine Rückförderpumpe (6), mit der ein Hydraulikfluid von der Radbremse (4) in Richtung des Hauptbremszylinders (1) zurückgepumpt werden kann, und eine Sensorik (19, 20) zum Erkennen eines negativen Reibwertsprungs der Fahrbahn,
**dadurch gekennzeichnet,dass**
Mittel (10, 18) vorgesehen sind, mit denen die Verstärkung des Bremskraftverstärkers (2), wenn ein Bremsmanöver auf einer Fahrbahn mit einem negativen Reibwertsprung erkannt wurde, auf einen kleineren Wert eingestellt wird als bei einem Bremsmanöver auf einer Fahrbahn ohne negativen Reibwertsprung.

2. Bremsvorrichtung nach Anspruch 1,
**dadurch gekennzeichnet,**
**dass** die Mittel (10, 18) eine Steuereinheit (18) und eine Vakuumpumpe (10) umfassen.

3. Bremsvorrichtung nach Anspruch 1 oder 2,
**dadurch gekennzeichnet,**
**dass** die Sensorik (19, 20) wenigstens einen Rad-Drehzahlsensor (19) und einen Sensor (20) zum Erkennen eines Bremsvorgangs umfasst.

4. Verfahren zum Bremsen der Räder eines Fahrzeuges (11), bei dem das Auftreten eines negativen Reibwertsprungs der Fahrbahn überwacht wird,
**dadurch gekennzeichnet,**
**dass** die Verstärkung eines Bremskraftverstärkers (2), wenn ein Bremsmanöver auf einer Fahrbahn mit einem negativen Reibwertsprung erkannt wurde, auf einen kleineren Wert eingestellt wird als bei einem Bremsmanöver auf einer Fahrbahn ohne negativen Reibwertsprung.

5. Verfahren nach Anspruch 4,
**dadurch gekennzeichnet,**
**dass** ferner der Bremsdruck (p_{HZ}) oder eine davon abhängige Größe überwacht wird und eine geringere Verstärkung des Bremskraftverstärkers (2) eingestellt wird, wenn der Bremsdruck (p_{HZ}) größer ist als ein vorgegebener Schwellenwert und ein negativer Reibwertsprung erkannt wurde.

6. Verfahren nach Anspruch 4 oder 5,
**dadurch gekennzeichnet,**
**dass** wenigstens eine Rad-Drehzahl (n_{Rad}) eines Vorderrades (14) und eine Rad-Drehzahl (n_{Rad}) eines Hinterrades (15) überwacht werden, um das Auftreten eines Reibwertsprungs zu erkennen.

7. Verfahren nach einem der Ansprüche 4 - 6,
**dadurch gekennzeichnet,**
**dass** zur Einstellung der geringeren Verstärkung des Bremskraftverstärkers (2), die Vakuumpumpe (10) mit einer geringeren Leistung betrieben oder vorrübergehend deaktiviert wird, so dass sie im Falle einer ABS-Regelung nicht oder zeitlich verzögert anläuft.

8. Verfahren nach einem der Ansprüche 4 - 7,
**dadurch gekennzeichnet,**
**dass** das Unterdruckniveau im Bremskraftverstärker (2) sensorisch überwacht (17) und die Vakuumpumpe (10) abhängig vom gemessenen Unterdruck betrieben wird.

## Claims

1. Brake device for braking the wheels of a vehicle (11), comprising at least one master brake cylinder (1), a brake booster (2), a wheel brake (4), a feedback pump (6) with which hydraulic fluid can be pumped back from the wheel brake (4) in the direction of the master brake cylinder (1), and a sensor system (19, 20) for detecting a sudden negative change in the coefficient of friction of the underlying surface,
**characterized in that**
means (10, 18) are provided with which the boosting of the brake booster (2) is set to a smaller value when a braking manoeuvre on an underlying surface with a sudden negative change in the coefficient of friction has been detected than in the case of a braking manoeuvre on an underlying surface without a sudden negative change in the coefficient of friction.

2. Brake device according to Claim 1,
**characterized**
**in that** the means (10, 18) comprise a control unit (18) and a vacuum pump (10).

3. Brake device according to Claim 1 or 2,
**characterized**
**in that** the sensor system (19, 20) comprises at least one wheel speed sensor (19) and a sensor (20) for detecting a braking process.

4. Method for braking the wheels of a vehicle (11) in which a sudden negative change in the coefficient of friction of the underlying surface is monitored,
**characterized**
**in that** the boosting of a brake booster (2) is set to a smaller value when a braking manoeuvre on an underlying surface with a sudden negative change in coefficient of friction has been detected than in the case of a braking manoeuvre on an underlying surface without a sudden negative change in the coefficient of friction.

5. Method according to Claim 4,
**characterized**
**in that** the brake pressure (p_{HZ}) or a variable derived therefrom is also monitored and a lower degree of boosting of the brake booster (2) is set if the brake pressure (p_{HZ}) is higher than a predefined threshold value and a sudden negative change in the coefficient of friction has been detected.

6. Method according to Claim 4 or 5,
**characterized**
**in that** at least one wheel speed (n_{Wheel}) of a front wheel (14) and a wheel speed (n_{Wheel}) of a rear wheel (15) are monitored in order to detect the occurrence of a sudden change in the coefficient of friction.

7. Method according to one of Claims 4 - 6,
**characterized**
**in that** in order to set the lower degree of boosting of the brake booster (2) the vacuum pump (10) is operated with lower power or is temporarily deactivated, with the result that said vacuum pump (10) does not start or starts after a delay in the case of ABS control.

8. Method according to one of Claims 4 - 7,
**characterized**
**in that** the under-pressure level in the brake booster (2) is monitored (17) by sensor and the vacuum pump (10) is operated as a function of the measured underpressure.

## Revendications

1. Dispositif de freinage pour freiner les roues d'un véhicule (11), comprenant au moins un cylindre de freinage principal (1), un servofrein (2), un frein de roue (4), une pompe de refoulement (6), avec laquelle un fluide hydraulique peut être repompé depuis le frein de roue (4) dans la direction du cylindre de freinage principal (1), et un système de capteur (19, 20) pour détecter un saut de coefficient de friction négatif de la chaussée,
**caractérisé en ce que**
des moyens (10, 18) sont prévus, avec lesquels l'amplification du servofrein (2), lorsqu'une manoeuvre de freinage sur une chaussée ayant un saut de coefficient de friction négatif a été détectée, est ajustée à une valeur inférieure par rapport au cas d'une manoeuvre de freinage sur une chaussée sans saut de coefficient de friction négatif.

2. Dispositif de freinage selon la revendication 1,
**caractérisé en ce que**
les moyens (10, 18) comprennent une unité de commande (18) et une pompe à vide (10).

3. Dispositif de freinage selon la revendication 1 ou 2,
**caractérisé en ce que**
le système de capteur (19, 20) comprend au moins un capteur de vitesse de rotation de roue (19) et un capteur (20) pour détecter une opération de freinage.

4. Procédé de freinage des roues d'un véhicule (11), dans lequel l'apparition d'un saut de coefficient de friction négatif de la chaussée est surveillée,
**caractérisé en ce que**
l'amplification d'un servofrein (2), lorsqu'une manoeuvre de freinage sur une chaussée ayant un saut de coefficient de friction négatif a été détectée, est ajustée à une valeur inférieure par rapport au cas d'une manoeuvre de freinage sur une chaussée sans saut de coefficient de friction négatif.

5. Procédé selon la revendication 4,
**caractérisé en ce que**
de plus la pression de freinage (p_{HZ}) ou une grandeur dépendant de celle-ci est surveillée et une amplification inférieure du servofrein (2) est ajustée lorsque la pression de freinage (p_{HZ}) est supérieure à une valeur seuil prédéfinie et qu'un saut de coefficient de friction négatif a été détecté.

6. Procédé selon la revendication 4 ou 5,
**caractérisé en ce**
**qu'**au moins une vitesse de rotation de roue (n_{Rad}) d'une roue avant (14) et une vitesse de rotation de roue (n_{Rad}) d'une roue arrière (15) sont surveillées, afin de détecter l'apparition d'un saut de coefficient de frottement.

7. Procédé selon l'une quelconque des revendications 4 à 6,
**caractérisé en ce que**
pour l'ajustement de l'amplification inférieure du servofrein (2), la pompe à vide (10) est entraînée avec une puissance inférieure ou est temporairement désactivée de telle sorte qu'elle ne fonctionne pas ou qu'elle fonctionne de manière retardée dans le temps dans le cas d'une régulation ABS.

8. Procédé selon l'une quelconque des revendications 4 à 7,
**caractérisé en ce que**
le niveau de dépression dans le servofrein (2) est surveillé par un système de capteur (17) et la pompe à vide (10) est entraînée en fonction de la dépression mesurée.
